# EUROPÄISCHE PATENTSCHRIFT

(11) **EP 3 740 663 B1**
(45) Veröffentlichungstag und Bekanntmachung des Hinweises auf die Patenterteilung: **10.07.2024**
(21) Anmeldenummer: 19700919.4
(22) Anmeldetag: 16.01.2019
(51) Int. Cl.: F02B 19/12, F02M 21/02, F02M 57/06, F02P 13/00, H01T 13/54

(54) **ZÜNDVORRICHTUNG FÜR EINEN GASMOTOR**
IGNITION DEVICE FOR GASEOUS FUEL ENGINE
DISPOSITIF D'ALLUMAGE POUR MOTEUR À COMBUSTIBLE GAZEUX

(30) Priorität: 18.01.2018 DE 102018101092
(43) Veröffentlichungstag der Anmeldung: 25.11.2020
(73) Patentinhaber: Russegger, Elias, 5440 Scheffau am Tennengebirge (AT)
(72) Erfinder: Russegger, Elias, 5440 Scheffau am Tennengebirge (AT)
(74) Vertreter: DREISS Patentanwälte PartG mbB
(86) Internationale Anmeldenummer: PCT/EP2019/051049
(87) Internationale Veröffentlichungsnummer: WO 2019/141728

(56) Entgegenhaltungen:
- EP-A1- 3 068 001
- WO-A1-2015/138987
- WO-A1-2016/057557
- DE-T2- 60 020 558
- US-A- 4 319 552
- US-B1- 8 757 129

## Beschreibung

Die Erfindung betrifft eine Zündvorrichtung für einen Gasmotor, mit einem Zündvorrichtungsgehäuse, einer Vorkammer und einer Kraftstoffzuführung zur Zuführung von Kraftstoff für eine Initialzündung in die Vorkammer.

Zündvorrichtungen mit Vorkammern für Gasmotoren sind aus dem Stand der Technik bekannt. Dabei kommen Zündvorrichtungen mit gespülten Vorkammern und mit ungespülten Vorkammern zum Einsatz. Bei Zündvorrichtungen mit gespülten Vorkammern wird der Vorkammer über ein in die Vorkammer mündendes Ventil Frischgas zugeführt, das nach Kompression infolge des Kolbenhubs des Gasmotors als angereichertes Kraftstoffgemisch gezündet wird. Eine solche Zündvorrichtung ist beispielsweise aus der DE 10 2013 210 125 A1 bekannt. Bei Zündvorrichtungen mit ungespülten Vorkammern ist die Vorkammer oftmals vergleichsweise klein ausgeführt, wobei die Vorkammer von einer Vorkammerkappe begrenzt ist und in der ein aus dem Brennraum stammendes und infolge der Kompression durch den Kolben in die Vorkammer geführtes Kraftstoffgemisch gezündet wird. Eine solche Zündvorrichtung ist beispielsweise aus der DE 10 2014 015 707 A1 bekannt. Weitere Zündvorrichtungen sind aus WO 2016/057557 A1, US 8 757 129 B1, WO 2015/138987 A1, DE 600 20 558 T2 und EP 3 068 001 A1 bekannt.

Allerdings ist bei Zündvorrichtungen mit gespülter Vorkammer problematisch, dass der konstruktive Aufwand der Zündvorrichtung hoch ist. Die Konstruktion des Zylinderkopfes des Gasmotors ist durch die konstruktive Ausgestaltung der Zündvorrichtung zu weiten Teilen vorgegeben. Konstruktive Kompromisse sind die Folge. Bei Zündvorrichtungen mit ungespülter Vorkammer ist der Wirkungsgrad des Gasmotors nach oben hin begrenzt.

Der Erfindung liegt die Aufgabe zugrunde, mit einfachen konstruktiven Mitteln den Betrieb eines Gasmotors mit einem vergleichsweise hohen Wirkungsgrad zu ermöglichen. Eine Möglichkeit zur Nachrüstung bestehender Gasmotoren ist wünschenswert.

Die Erfindung löst die Aufgabe mit den Merkmalen des Anspruchs 1. Danach zeichnet sich die Zündvorrichtung dadurch aus, dass die Kraftstoffzuführung in das Zündvorrichtungsgehäuse integriert ist.

Durch die Integration der Kraftstoffzuführung für eine Initialzündung (Initialkraftstoffzuführung) in die Zündvorrichtung ist eine vergleichsweise platzsparende Bauweise ermöglicht. Dadurch ist die konstruktive Freiheit bei der Entwicklung von Zylinderköpfen für Gasmotoren erhöht und deren Neukonstruktion erleichtert. Durch die Integration der Kraftstoffzuführung in die Zündvorrichtung ist eine zentrische Kraftstoffeinleitung und damit eine ideale Durchspülung der Vorkammer erreicht. Restgas aus dem vorherigen Verbrennungstakt wird verdrängt.

Durch die zentrische Kraftstoffeinleitung ist zudem eine wirksame Kühlung der Zündelektroden realisierbar, so dass die Standzeit der Zündvorrichtung verlängert ist. Durch die integrierte Bauweise von Zündvorrichtung und Kraftstoffzuführung kann auf eine Zündkerzenhülse, die bislang zur Kühlung erforderlich war und am Zylinderkopf einen großen Bauraum beansprucht hat, nunmehr verzichtet werden.

Durch die Integration der Kraftstoffzuführung in die Zündvorrichtung ist zudem eine einfache Nachrüstbarkeit bestehender Gasmotoren mit ungespülter Vorkammer möglich, da die Zündvorrichtung hierzu lediglich in der Zündkerzenöffnung des nachzurüstenden Gasmotors befestigt oder in diese eingeschraubt werden muss. Weitere Modifikationen sind nicht erforderlich. Eine Wirkungsgradsteigerung des Gasmotors von 1 bis 2 Prozent ist durch diese Nachrüstung realisierbar.

Bei der Zündvorrichtung handelt es sich insbesondere um eine Zündkerze. Demnach kann die Erfindung eine Zündkerze für einen Gasmotor vorsehen, mit einer Vorkammer und einer Kraftstoffzuführung zur Zuführung von Kraftstoff (Initialkraftstoff) in die Vorkammer, wobei die Kraftstoffzuführung in die Zündkerze integriert ist.

Im Konkreten kann die Vorkammer in einem Vorkammergehäuseabschnitt angeordnet sein, der sich an das Zündvorrichtungsgehäuse anschließt und/oder ein Teil dieses Gehäuses bildet. Weiter können Zündelektroden vorgesehen sein, die als Zündeinrichtung für ein Initialkraftstoffgemisch in der Vorkammer dienen. Außerdem ist denkbar, dass die innerhalb des Zündvorrichtungsgehäuses angeordnete Kraftstoffzuführung parallel oder koaxial zu einer Längsrichtung ausgerichtet ist, entlang der sich das Zündvorrichtungsgehäuse erstreckt.

Im Rahmen einer bevorzugten Ausgestaltung kann die Kraftstoffzuführung, insbesondere ein den Kraftstoff führender Kraftstoffkanal, konzentrisch im Zündvorrichtungsgehäuse angeordnet sein. Beispielsweise kann die Kraftstoffzuführung, insbesondere der Kraftstoffkanal, innerhalb der mittleren 50 % des Gehäusequerschnitts oder Gehäusedurchmessers des Gehäuses der Zündvorrichtung angeordnet sein. Auch eine vollkommen konzentrische Anordnung der Kraftstoffzuführung - Längsmittelachse eines den Kraftstoff führenden Kraftstoffkanals liegt auf der Längsmittelachse des Gehäuses der Zündvorrichtung - ist denkbar.

Für den Gasmotor kommt Gas, insbesondere verflüssigtes Gas, als Kraftstoff zum Einsatz, welches im verdampften Zustand in die Zündvorrichtung und/oder in den Gasmotor gelangt. Im Folgenden wird der Einheit halber der Begriff "Kraftstoff" verwendet.

Zweckmäßigerweise weist die Zündungsvorrrichtung an oder in der Vorkammer eine Mittelelektrode auf und die Übertragung der Zündspannung auf die Mittelelektrode erfolgt über die Kraftstoffzuführung.

Hierzu sind Komponenten der Kraftstoffzuführung, beispielsweise ein Kraftstoffkanal und/oder ein den Kraftstoffzufluss regelndes Ventil, elektrisch leitend ausgebildet. Dies trägt zu einer kompakten Ausführung durch Integration weiterer Funktionen in bestehende Bauteile bei. Auf eine separate Leitungsführung der Zündspannung zur Mittelelektrode kann verzichtet werden. Dadurch werden Herstellung und Montage erleichtert.

In vorteilhafter Weise kann die Kraftstoffzuführung einen Kraftstoffkanal aufweisen und am oder nahe am vorkammerseitigen Ende des Kraftstoffkanals ein vorgespanntes Ventil aufweisen. Dabei ist eine konstruktiv einfache und zuverlässige Kraftstoffzuführregelung geschaffen, wobei eine Ansteuerung des Ventils durch die infolge der Kolbenbewegung im Brennraum des Gasmotors herrschenden Druckverhältnisse erfolgt. Bewegt sich der Kolben des Gasmotors im Ansaugtakt in Richtung unterer Totpunkt, wird das Ventil durch Unterdruck geöffnet. Im Kompressionstakt wird das Ventil infolge des ansteigenden Brennraumdrucks wieder geschlossen. Im Konkreten kann das Ventil als Rückschlagventil ausgebildet sein. Eine Einstellung des Öffnungs- und Schließdrucks des Ventils kann anhand des Drucks im Kraftstoffkanal erfolgen. Beispielsweise kann der Kraftstoffdruck im Kraftstoffkanal etwa 300 Millibar aufweisen.

Im Rahmen der Erfindung ist der Kraftstoffkanal zumindest abschnittsweise durch ein elektrisch leitendes Rohr ausgebildet. Dies ermöglicht eine Übertragung der Zündspannung auf die Mittelelektrode. Dabei kann das Rohr als Kapillarrohr ausgebildet sein.

Zweckmäßigerweise kann ein elektrisch leitendes Verbindungselement zur elektrischen Kopplung des Kraftstoffkanals, insbesondere des elektrisch leitenden Rohrs, mit einem Zündkabelanschlusselement vorgesehen sein. Damit wird die Distanz zwischen Zündkabelanschlusselement und Kraftstoffkanal, insbesondere elektrisch leitendem Rohr, überbrückt. Dabei kann das Verbindungselement entlang der Längsrichtung des Gehäuses der Zündvorrichtung ausgerichtet sein. Die Länge des Verbindungselements entlang der Längsrichtung des Gehäuses der Zündvorrichtung kann in etwa der Länge des elektrisch leitenden Rohrs entsprechen, insbesondere um weniger als 20 % von der Länge des elektrisch leitenden Rohrs abweichen. Das Zündkabelanschlusselement kann als Anschlussstift für einen Zündkerzenstecker ausgebildet sein. Zwischen elektrischem Verbindungselement und Zündkabelanschlusselement kann ein Entstörwiderstand angeordnet sein. Der Entstörwiderstand kann, je nach Anforderung des Gasmotors, eine Impedanz von 1 Kilo-Ohm bis 5 Kilo-Ohm (kΩ) aufweisen.

In vorteilhafter Weise kann das Ventil einen Ventilkörper und einen relativ zum Ventilkörper verlagerbaren Ventilkolben aufweisen und der Kraftstoff kann das Ventil durch mindestens einen Drosseldurchgang, insbesondere eine Drosselbohrung, passieren. Mittels des Drosseldurchgangs wird mit konstruktiv einfachen Mitteln die das Ventil passierende und der Vorkammer zugeführte Kraftstoffmenge festgelegt. Der Drosseldurchgang kann parallel zur Längsachse des Ventilkolbens, entlang der der Ventilkolben verlagerbar ist, orientiert sein. Denkbar ist, dass zwei oder mehr Drosseldurchgänge vorgesehen sind.

Im Rahmen einer bevorzugten Ausgestaltung kann sich an den Ventilkörper ein Stützkörper anschließen, der mindestens einen Gasführungskanal zur direkten und gezielten Zuführung des Kraftstoffs in einen Zwischenraum zwischen Mittelelektrode und Masseelektrode aufweist (Zündungszwischenraum). Dies ermöglicht eine gezielte direkte Kühlung der Masseelektrode über eine zentrale Einleitung des Kraftstoffes. Dies führt zu einer erheblichen Verlängerung der Lebensdauer der Masseelektrode. Im Konkreten können zwei oder mehrere Gasführungskanäle, insbesondere Gasführungsbohrungen, vorgesehen sein. Die Gasführungskanäle können bezogen auf die Längsachse des Ventilkörpers parallel oder angewinkelt angeordnet sein. Relevant ist eine direkte Zuführung des Kraftstoffs in den Zündungszwischenraum (Raum zwischen Zündelektroden). Weiter ist denkbar, dass der Stützkörper mit dem Ventilkörper verschweißt und/oder elektrisch leitend ausgebildet ist. Zudem hält der Stützkörper die Mittelelektrode, beispielsweise an einem verjüngten Stützkörperabschnitt.

In zweckmäßiger Weise können das Rohr und/oder das Ventil durch einen insbesondere keramischen Isolator umgeben sein und der Isolator kann am von der Vorkammer abgewandten Ende in einen weiteren Gehäuseabschnitt, insbesondere einen Kunststoffgehäuseabschnitt, übergehen. Dies ermöglicht eine kostengünstige Bauweise, da ein temperaturfester Isolator nur dort eingesetzt wird, wo dieser tatsächlich erforderlich ist. Ein Kunststoffgehäuseabschnitt kann, beispielsweise mittels eines Spritzgussverfahrens, einfach hergestellt werden. Dabei können Komponenten in den Kunststoffgehäuseabschnitt eingegossen werden, beispielsweise ein elektrisch leitendes Verbindungselement zur Verbindung von Kraftstoffkanal und Zündkabelanschlusselement (Einlegeelement und/oder Entstörwiderstand).

Im Konkreten kann zwischen einem Vorkammergehäuseabschnitt, in dem die Vorkammer angeordnet ist, und dem Isolator und/oder zwischen dem Ventilkörper und dem Isolator ein Dichtsitz ausgebildet sein. Dabei kann es sich um eine Dichtfase oder einen Presssitz handeln. Hiermit ist eine zuverlässige Abdichtung der Zündvorrichtung insbesondere in Kraftwirkungsrichtung (vom Brennraum kommender Verbrennungsdruck) ermöglicht.

Im Rahmen einer bevorzugten Ausgestaltung kann die Kraftstoffzuführung ein Kraftstoffregelventil zur gezielten Regelung der zugeführten Kraftstoffmenge aufweisen. Dabei kann es sich um ein elektrisch ansteuerbares Kraftstoffregelventil, insbesondere um ein elektrisches Magnetventil, handeln. Das Kraftstoffregelventil kann an oder im Kraftstoffanschluss angeordnet sein, wobei der Kraftstoffanschluss am von der Vorkammer abgewandten Ende der Zündvorrichtung ausgebildet ist. Dabei können Zeitpunkt und/oder Fördermenge des zugeführten Kraftstoffs noch genauer bestimmt werden als mit einer Ansteuerung des Ventils am vorkammerseitigen Ende des Kraftstoffkanals basierend auf vorherrschenden Druckverhältnissen im Brennraum oder in der Vorkammer. Dabei ist der Beibehalt des Ventils am vorkammerseitigen Ende zur Abdichtung der Kraftstoffzuführung von Vorteil. Der Einsatz eines Kraftstoffregelventils ist insbesondere bei LNG-Motoren mit variabler Drehzahl vorteilhaft.

Die Erfindung wird im Folgenden anhand der Figuren näher erläutert. Es zeigen:
- Fig.1: in einer perspektivischen Ansicht ein Ausführungsbeispiel einer Zündvorrichtung;
- Fig.2: einen Längsschnitt der Zündvorrichtung aus Fig.1;
- Fig.3: in einem vergrößerten Ausschnitt einen Längsschnitt der Zündvorrichtung aus Fig.1 am vorkammerseitigen Ende der Kraftstoffzuführung;
- Fig.4: in einem vergrößerten Ausschnitt einen Längsschnitt der Zündvorrichtung aus Fig.1 am Übergang zwischen Isolator und Kunststoffgehäuseabschnitt.

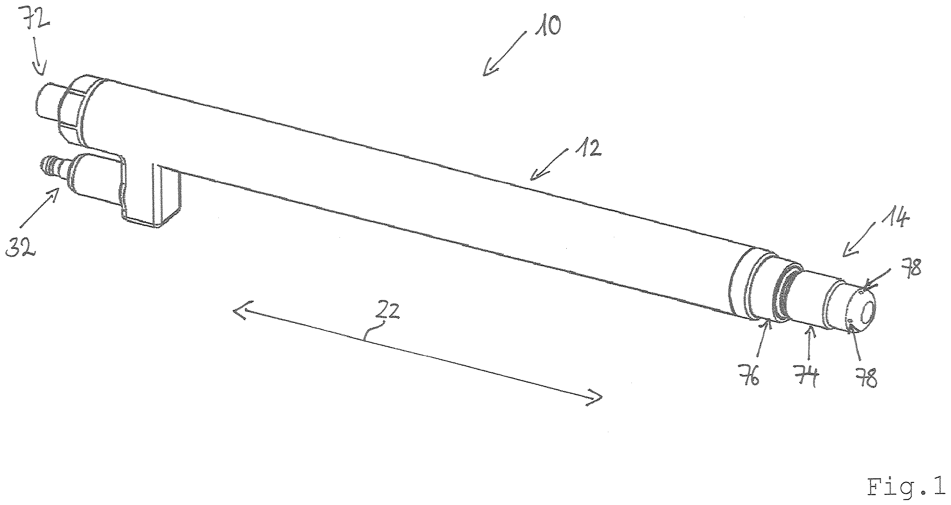

Figur 1 zeigt eine Zündvorrichtung für einen Gasmotor, die insgesamt mit dem Bezugszeichen 10 bezeichnet ist. Die Zündvorrichtung 10 ist als Zündkerze ausgebildet.

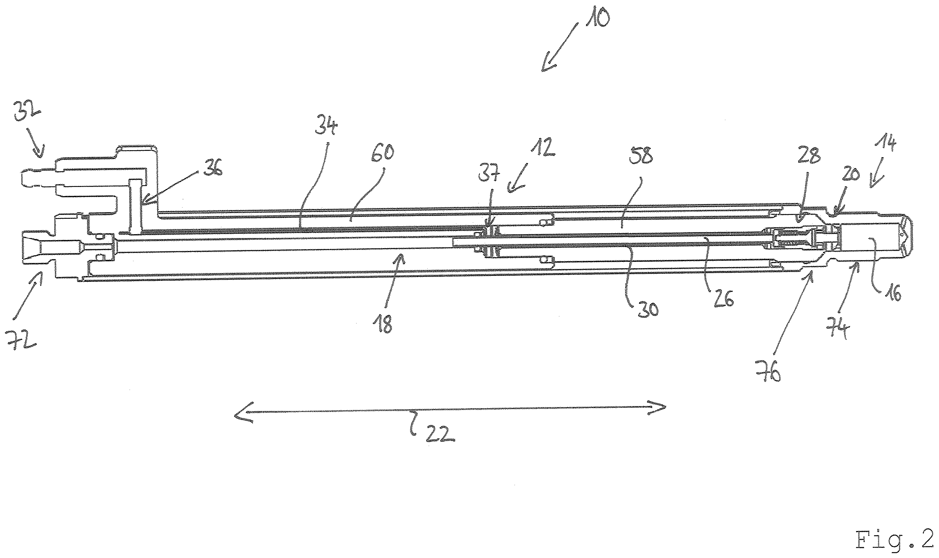

Die Zündvorrichtung 10 weist ein Zündvorrichtungsgehäuse 12 und eine Vorkammer 16 auf. Die Vorkammer 16 ist in einem sich an das Zündvorrichtungsgehäuse 12 anschließenden Vorkammergehäuseabschnitt 14 angeordnet. Weiter weist die Zündvorrichtung 10 eine Kraftstoffzuführung 18 zur Zuführung von Kraftstoff (Gas) für eine Initialzündung in die Vorkammer 16 auf. Die Kraftstoffzuführung 18 ist in das Zündvorrichtungsgehäuse 12 integriert. In der Vorkammer 16 ist eine Zündungseinrichtung 20 zur Zündung eines Kraftstoffgemisches vorgesehen (siehe Figur 2).

Das Zündvorrichtungsgehäuse 12 erstreckt sich entlang einer Längsrichtung 22. Die Kraftstoffzuführung 18 ist innerhalb des Gehäuses 12 angeordnet und koaxial zur Längsrichtung 22 des Zündvorrichtungsgehäuses 12 ausgerichtet.

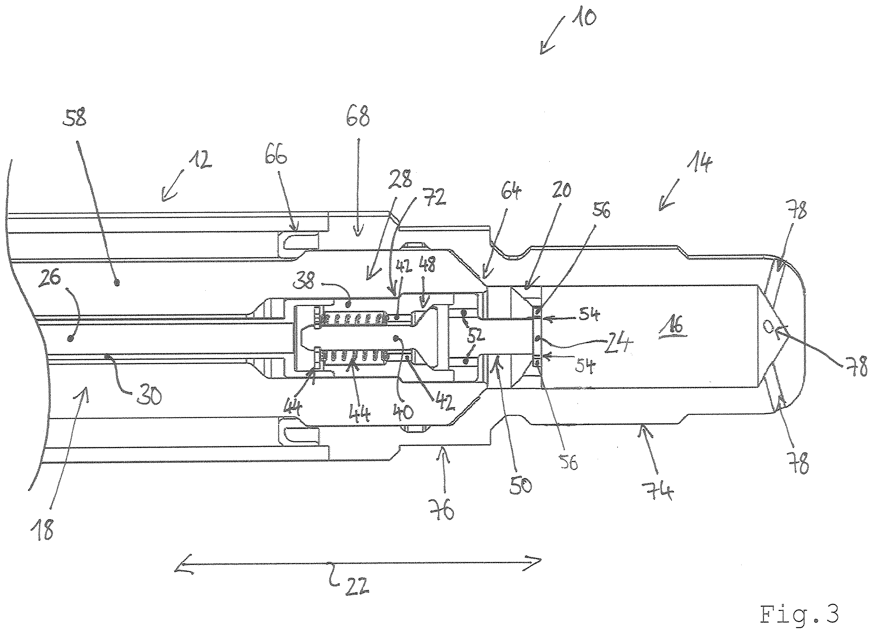

Die Zündungseinrichtung 20 weist in der Vorkammer 16 eine Mittelelektrode 24 auf (siehe Figur 3). Die Übertragung der Zündspannung auf die Mittelelektrode 24 erfolgt über die Kraftstoffzuführung 18. Dabei sind Komponenten der Kraftstoffzuführung 18 elektrisch leitend ausgebildet.

Die Kraftstoffzuführung 18 weist einen Kraftstoffkanal 26 auf und am oder nahe am vorkammerseitigen Ende des Kraftstoffkanals 26 ein vorgespanntes Ventil 28 auf. Das Ventil 28 ist als Rückschlagventil ausgebildet und wird entsprechend der im Brennraum des Gasmotors vorherrschenden Druckverhältnisse angesteuert. Der Kraftstoffkanal 28 ist zumindest abschnittsweise durch ein elektrisch leitendes Rohr oder Kapillarrohr 30 ausgebildet.

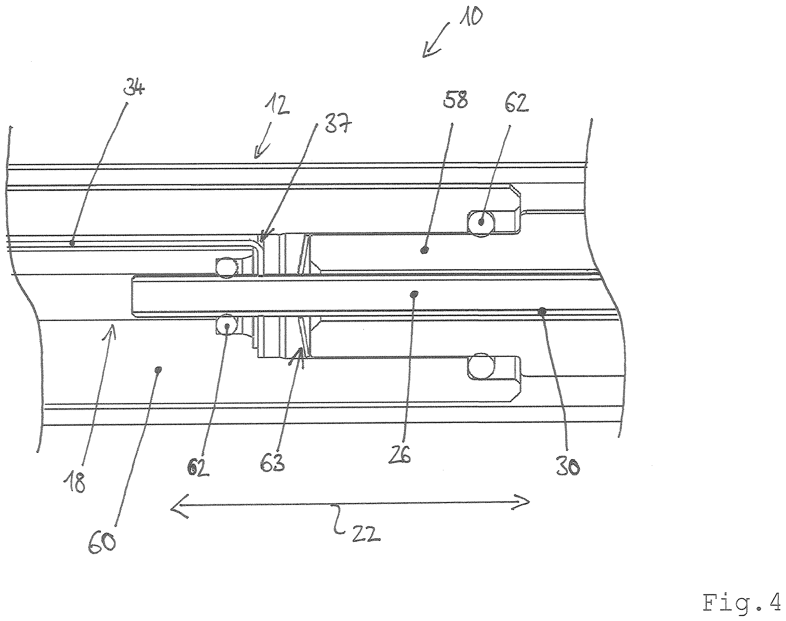

Zur elektrischen Kopplung von Kraftstoffkanal 26 oder Rohr 30 und einem Zündkabelanschlusselement 32 (Anschlussstift für Zündkerzenstecker) ist ein elektrisch leitendes Verbindungselement 34 vorgesehen (siehe Figur 1). Zwischen Zündkabelanschlusselement 32 und Verbindungselement 34 ist ein Entstörwiderstand 36 angeordnet. Die elektrische Kopplung zwischen Verbindungselement 34 und Kraftstoffkanal 26 oder Rohr 30 erfolgt über einen angewinkelten, insbesondere L-förmigen, Abschnitt 37 des Verbindungselements 34 (siehe Figur 4).

Das Ventil 28 weist einen Ventilkörper 38 und einen relativ zum Ventilkörper 38 verlagerbaren Ventilkolben 40 auf (siehe Figur 3). Der Kraftstoff passiert das Ventil 28 durch zwei Drosseldurchgänge 42 in Form von Drosselbohrungen, die parallel zur Längsrichtung des Ventilkolbens 40 orientiert sind.

Das Ventil 28 weist zudem eine Schließfeder 44 auf, die den Ventilkolben 40 in Schließrichtung vorspannt (Druckfeder). In einer Nut des Ventilkolbens 40 ist eine Federscheibe oder Schnappfeder 46 angeordnet, an der die Schließerfeder 44 einends anliegt. Dabei dient die Federscheibe oder Schnappfeder 46 auch als Hubanschlag gegenüber dem Ventilkörper 38, so dass eine Verlagerung des Ventilkörpers 38 in Richtung Vorkammer 16 begrenzt ist.

Der Ventilkolben 40 weist an seinem der Vorkammer 16 zugewandten Ende einen konischen Abschnitt 48 zur Bereitstellung eines Dichtsitzes mit dem Ventilkörper 38 auf. Die Drosseldurchgang 42 münden in diesen Dichtsitz. Der Ventilkörper 38 ist mit einem Endabschnitt des Kraftstoffkanals 26 oder Rohrs 30 verschweißt.

An den Ventilkörper 38 schließt sich ein Stützkörper 50 an, der zwei Gasführungskanäle 52 zur Zuführung des Kraftstoffs in einen Zwischenraum 54 zwischen Mittelelektrode 24 und Masseelektrode 56 aufweist (Zündungszwischenraum). Der Stützkörper 50 ist mit dem Ventilkörper 38 verschweißt. Der Stützkörper 50 trägt die Mittelelektrode 24 an einem verjüngten Abschnitt des Stützkörpers 50. Zudem ist der Stützkörper 50 elektrisch leitend ausgebildet.

Das Rohr 30 und/oder das Ventil 28 sind durch einen keramischen Isolator 58 umgeben. Der Isolator 58 geht an seinem der Vorkammer 16 abgewandte Enden in einen als Kunststoffgehäuseabschnitt ausgebildeten weiteren Gehäuseabschnitt 60 über (siehe Figur 2). Der Gehäuseabschnitt 60 ist gegenüber dem Isolator 58 sowie gegenüber dem Rohr 30 mittels Dichtungen 62 abgedichtet (siehe Figur 4). Im Kunststoffgehäuseabschnitt 60 ist das elektrisch leitende Verbindungselement 34 angeordnet, welches bei der Herstellung des Kunststoffgehäuseabschnitt 60 eingelegt und umspritzt werden kann.

Der Kraftstoffkanal 26 oder das Rohr 30 sind mittels einer Tellerfeder 63 gegen Verrutschen bezüglich dem Isolator 58 gesichert.

Zwischen Vorkammergehäuseabschnitt 14 und Isolator 58 ist ein Dichtsitz 64 ausgebildet (siehe Figur 3). Am von der Vorkammer 16 abgewandten Ende des

Vorkammergehäuseabschnitts 14 ist ein Befestigungsteil 66 eingeschweißt. Dieses fixiert den Vorkammergehäuseabschnitt 14 an einem distalen Abschnitt 68 des Isolators 58 durch einen Hintergriff. Der Dichtsitz 64 kann durch eine sogenannte "Hot-Lock-Verbindung" abgedichtet werden. Zwischen Ventilkörper 38 und Isolator 58 ist ein Dichtsitz 70 in Form einer Dichtfase ausgebildet.

Die Kraftstoffzuführung 18 weist zur gezielten Regelung der zugeführten Kraftstoffmenge ein Kraftstoffregelventil in Form eines elektrischen Magnetventils auf (nicht dargestellt). Das Kraftstoffregelventil kann an oder in einem Kraftstoffanschluss 72 angeordnet sein, der am von der Vorkammer 16 abgewandten Ende der Zündvorrichtung 10 ausgebildet ist (siehe Figur 1).

Der Vorkammergehäuseabschnitt 14 weist einen Gewindeabschnitt 74 mit einem Zündkerzengewinde und einen Werkzeugangriffsabschnitt 76 beispielsweise in Form eines Außensechskants auf. Zudem weist der Vorkammergehäuseabschnitt 14 Zugänge 78 zum Brennraum auf, die oftmals als "Flammrohre" oder "Zündfackelbohrungen" bezeichnet werden, da sich die Verbrennung des Kraftstoffgemisches durch die Zugänge 78 in den Hauptbrennraum des Gasmotors ausbreitet.

## Patentansprüche

1. Zündvorrichtung (10) für einen Gasmotor, mit einem Zündvorrichtungsgehäuse (12), einer Vorkammer (16) und einer Kraftstoffzuführung (18) zur Zuführung von Kraftstoff für eine Initialzündung in die Vorkammer (16), wobei die Kraftstoffzuführung (18) in das Zündvorrichtungsgehäuse (12) integriert ist, **dadurch gekennzeichnet, dass** die Kraftstoffzuführung (18) einen Kraftstoffkanal (26) und am oder nahe am vorkammerseitigen Ende des Kraftstoffkanals (26) ein vorgespanntes Ventil (28) aufweist, wobei das Ventil (28) einen Ventilkörper (38) und einen relativ zum Ventilkörper (38) verlagerbaren Ventilkolben (40) aufweist und der Kraftstoff das Ventil (28) durch mindestens einen Drosseldurchgang (42) passiert, und wobei sich an den Ventilkörper (38) ein Stützkörper (50) anschließt, der mindestens einen Gasführungskanal (52) zur Zuführung des Kraftstoffs in einen Zwischenraum (54) zwischen Mittelelektrode (24) und Masseelektrode (56) aufweist, wobei der Stützkörper (50) mit dem Ventilköper (38) verschweißt und elektrisch leitend ausgebildet ist, wobei der Stützkörper (50) die Mittelelektrode (24) hält und die Übertragung der Zündspannung auf die Mittelelektrode (24) über die Kraftstoffzuführung (18) erfolgt.

2. Zündvorrichtung (10) nach Anspruch 1, **dadurch gekennzeichnet, dass** die Mittelelektrode (24) an oder in der Vorkammer (16) angeordnet ist und dass die Übertragung der Zündspannung auf die Mittelelektrode (24) über die Kraftstoffzuführung (18) erfolgt.

3. Zündvorrichtung (10) nach Anspruch 1 oder 2, **dadurch gekennzeichnet, dass** der Kraftstoffkanal (26) zumindest abschnittsweise durch ein elektrisch leitendes Rohr (30) ausgebildet ist.

4. Zündvorrichtung (10) nach einem der voranstehenden Ansprüche, **dadurch gekennzeichnet, dass** ein elektrisch leitendes Verbindungselement (34) zur elektrischen Kopplung des Kraftstoffkanals (26) mit einem Zündkabelanschlusselement (32) vorgesehen ist.

5. Zündvorrichtung (10) nach einem der voranstehenden Ansprüche, **dadurch gekennzeichnet, dass** das Rohr (30) und/oder das Ventil (28) durch einen Isolator (58) umgeben sind und dass der Isolator (58) am von der Vorkammer (16) abgewandten Ende in einen weiteren Gehäuseabschnitt, insbesondere einen Kunststoffgehäuseabschnitt (60) übergeht.

6. Zündvorrichtung (10) nach Anspruch 5, **dadurch gekennzeichnet, dass** zwischen einem Vorkammergehäuseabschnitt (14), in dem die Vorkammer (16) angeordnet ist, und Isolator (58) und/oder zwischen Ventilkörper (38) und Isolator (58) ein Dichtsitz (64, 70) ausgebildet ist.

7. Zündvorrichtung (10) nach einem der vorhergehenden Ansprüche, **dadurch gekennzeichnet, dass** die Kraftstoffzuführung (18) ein Kraftstoffregelventil (elektronisches Magnetventil) zur gezielten Regelung der zugeführten Kraftstoffmenge aufweist.

## Claims

1. Ignition device (10) for a gas engine, having an ignition device housing (12), a pre-chamber (16) and a fuel supply means (18) for supplying fuel for initial ignition into the pre-chamber (16), the fuel supply means (18) being integrated into the ignition device housing (12), **characterized in that** the fuel supply means (18) comprises a fuel channel (26) and a preloaded valve (28) at or near the pre-chamber-side end of the fuel channel (26), the valve (28) comprising a valve body (38) and a valve piston (40) which is movable relative to the valve body (38), and the fuel passing through the valve (28) through at least one throttle passage (42), and the valve body (38) being joined to a support body (50) which comprises at least one gas guide channel (52) for supplying the fuel into an intermediate space (54) between a center electrode (24) and a ground electrode (56), the support body (50) being welded to the valve body (38) and being electrically conductive, the support body (50) holding the center electrode (24) and the ignition voltage being transmitted to the center electrode (24) via the fuel supply means (18).

2. Ignition device (10) according to claim 1, **characterized in that** the center electrode (24) is arranged on or in the pre-chamber (16) **and in that** the ignition voltage is transmitted to the center electrode (24) via the fuel supply means (18).

3. Ignition device (10) according to claim 1 or claim 2, **characterized in that** the fuel channel (26) is formed, at least in portions, by an electrically conductive tube (30).

4. Ignition device (10) according to any of the preceding claims, **characterized in that** an electrically conductive connecting element (34) is provided for electrically coupling the fuel channel (26) to an ignition cable connection element (32).

5. Ignition device (10) according to any of the preceding claims, **characterized in that** the tube (30) and/or the valve (28) are surrounded by an insulator (58) **and in that** the insulator (58) transitions into a further housing portion, in particular a plastics housing portion (60), at the end facing away from the pre-chamber (16).

6. Ignition device (10) according to claim 5, **characterized in that** a sealing seat (64, 70) is formed between a pre-chamber housing portion (14), in which the pre-chamber (16) is arranged, and the insulator (58) and/or between the valve body (38) and the insulator (58).

7. Ignition device (10) according to any of the preceding claims, **characterized in that** the fuel supply means (18) has a fuel control valve (electronic solenoid valve) for targetedly controlling the amount of fuel supplied.

## Revendications

1. Dispositif d'allumage (10) pour un moteur à gaz, comportant un boîtier de dispositif d'allumage (12), une préchambre (16) et un moyen d'alimentation en carburant (18) pour l'alimentation en carburant pour un allumage initial dans la préchambre (16), dans lequel le moyen d'alimentation en carburant (18) est intégré dans le boîtier de dispositif d'allumage (12), **caractérisé en ce que** le moyen d'alimentation en carburant (18) présente un canal de carburant (26) et, au niveau ou à proximité de l'extrémité côté préchambre du canal de carburant (26), une vanne (28) précontrainte, dans lequel la vanne (28) présente un corps de vanne (38) et un piston de vanne (40) déplaçable par rapport au corps de vanne (38) et le carburant passe à travers la vanne (28) par au moins un passage d'étranglement (42), et dans lequel un corps de support (50) se raccorde au corps de vanne (38), lequel corps de support présente au moins un canal de guidage de gaz (52) pour l'alimentation en carburant dans un espace intermédiaire (54) entre une électrode centrale (24) et une électrode de masse (56), dans lequel le corps de support (50) est soudé au corps de vanne (38) et est formé de manière à être électriquement conducteur, dans lequel le corps de support (50) maintient l'électrode centrale (24) et la transmission de la tension d'allumage à l'électrode centrale (24) est effectuée par l'intermédiaire du moyen d'alimentation en carburant (18).

2. Dispositif d'allumage (10) selon la revendication 1, **caractérisé en ce que** l'électrode centrale (24) est disposée sur ou dans la préchambre (16) **et en ce que** la transmission de la tension d'allumage à l'électrode centrale (24) est effectuée par l'intermédiaire du moyen d'alimentation en carburant (18).

3. Dispositif d'allumage (10) selon la revendication 1 ou 2,
**caractérisé en ce que** le canal de carburant (26) est formé au moins dans certaines sections par un tube (30) électriquement conducteur.

4. Dispositif d'allumage (10) selon l'une des revendications précédentes, **caractérisé en ce qu'**un élément de connexion (34) électriquement conducteur est prévu pour le couplage électrique du canal de carburant (26) à un élément de raccordement de câble d'allumage (32).

5. Dispositif d'allumage (10) selon l'une des revendications précédentes, **caractérisé en ce que** le tube (30) et/ou la vanne (28) sont entourés par un isolateur (58) **et en ce que** l'isolateur (58) se prolonge, au niveau de l'extrémité opposée à la préchambre (16), dans une autre section de boîtier, en particulier une section de boîtier en matière plastique (60).

6. Dispositif d'allumage (10) selon la revendication 5, **caractérisé en ce qu'**un siège d'étanchéité (64, 70) est formé entre une section de boîtier pour préchambre (14), dans laquelle la préchambre (16) est disposée, et l'isolateur (58) et/ou entre le corps de vanne (38) et l'isolateur (58).

7. Dispositif d'allumage (10) selon l'une des revendications précédentes, **caractérisé en ce que** le moyen d'alimentation en carburant (18) présente une vanne de régulation de carburant (électrovanne électronique) pour la régulation ciblée de la quantité de carburant alimentée.
